# EUROPÄISCHE PATENTSCHRIFT

(11) **EP 2 736 831 B1**
(45) Veröffentlichungstag und Bekanntmachung des Hinweises auf die Patenterteilung: **06.05.2015**
(21) Anmeldenummer: 12737254.8
(22) Anmeldetag: 12.07.2012
(51) Int. Cl.: B66D 1/34

(54) **HEBEWERK**
HOISTING GEAR
DISPOSITIF DE LEVAGE

(30) Priorität: 27.07.2011 DE 102011052183
(43) Veröffentlichungstag der Anmeldung: 04.06.2014
(73) Patentinhaber: MHWirth GmbH, 41812 Erkelenz (DE)
(72) Erfinder: HEINRICHS, Albrecht, 41812 Erkelenz (DE)
(74) Vertreter: Kluin, Jörg-Eden
(86) Internationale Anmeldenummer: PCT/EP2012/063684
(87) Internationale Veröffentlichungsnummer: WO 2013/013991

(56) Entgegenhaltungen:
- CN-U- 201 896 047
- JP-A- 3 284 600
- JP-A- 10 245 194
- JP-A- 2002 060 184
- JP-U- 52 171 077
- JP-U- 64 029 387

## Beschreibung

Die Erfindung betrifft ein Hebewerk mit einem Seil zum Ablassen und Aufholen einer Last, insbesondere einer Bohreinrichtung, und mit einer um eine Drehachse drehbar gelagerten Trommel zum Auf- und Abwickeln des Seils, die mindestens eine Bordscheibe umfasst, an welcher eine Einrichtung zur Festlegung des Seils vorgesehen ist.

Derartige Hebewerke, wie sie beispielsweise aus der WO 01/64573 A2 bekannt sind, dienen dem Ablassen und Aufholen einer Last, insbesondere einer Bohreinrichtung, beispielsweise von einer Plattform in ein Bohrloch oder auf den Meeresgrund, mit einem Seil. Im Falle einer einfachen Einscherung ist ein Ende des Seiles an der Bohreinrichtung befestigt. Bei mehrfacher Einscherung wird die Last mittels eines Flaschenzugsystems gehoben und gesenkt. Die Bohreinrichtung ist dann an dem absenk- und hebbaren Block des Flaschenzugs befestigt. Ein Ende des Seiles ist an einem Totseilanker befestigt. In beiden Fällen ist das jeweils andere Ende des Seiles an einer an der Außenseite der Bordscheibe vorgesehenen Einrichtung zur Festlegung des Seils befestigt. Durch eine Durchführung in der Bordscheibe ist das Seil zur Trommel hin geführt und ist auf diese - je nachdem, wie weit die Bohreinrichtung aufgeholt oder abgesenkt ist - mehr oder weniger aufgewickelt.

Das Seil unterliegt aufgrund der erheblichen Belastungen, denen es während des Betriebs durch regelmäßige Aufhol- und Absenkvorgänge unter hoher Geschwindigkeit mit den hierdurch verbundenen Beschleunigungskräften ausgesetzt ist, einem erheblichen Verschleiß. Da ein Seilriss unabsehbare Folgen mit sich brächte, muss das Seil regelmäßig ausgetauscht oder nachgenommen (gekürzt) werden, damit so bislang nicht verschlissene Bereiche den Belastungen ausgesetzt werden.

Hierzu ist es bei den bekannten Hebewerken erforderlich, die an der Bordscheibe befindliche Einrichtung zur Festlegung des Seils zu öffnen, wozu Bedienpersonal an der Bordscheibe der Trommel tätig werden muss. Dies bringt jedoch bei modernen Hebewerken, bei welchen dicht benachbart zu den Bordscheiben weitere Hebewerkkomponenten, wie Bremsen oder Getriebegehäuse angeordnet sind, erhebliche Schwierigkeiten mit sich, da Personal in dem geringen, zur Verfügung stehenden Freiraum arbeiten muss.

Aus der JP 52 171077 U ist es bekannt, innen an einer Bordscheibe eine Ausnehmung vorzusehen und in dieser Ausnehmung eine Seilklemme anzuordnen, die Konusflächen aufweist.

Die CN 201896047 U zeigt eine Seilklemme.

Die JP 64 29387 U zeigt eine Seiltrommel mit von innen nach außen durchgeführtem Seil und außerhalb der Seiltrommel angeordneter Seilklemmanordnung.

Die JP 2002060184 A zeigt eine Seiltrommel mit daran angeordneter Seilklemme.

Auch die JP 3284600 A zeigt eine Wickeltrommel mit daran angeordneter Seilklemmanordnung.

Der Erfindung liegt daher die Aufgabe zugrunde, ein verbessertes Hebewerk zu schaffen.

Diese Aufgabe wird durch das in Anspruch 1 wiedergegebene Hebewerk gelöst.

Bei diesem Hebewerk umfasst die Einrichtung zur Festlegung des Seiles einen in Zugrichtung des Seiles an der Bordscheibe festgelegten Seilaufnahmebock, durch den das Seil lose zur Trommel durchgeführt ist. Ferner umfasst die Einrichtung zur Festlegung des Seiles eine an dem Seil in Zugrichtung festlegbare Seilklemme. Der Seilaufnahmebock weist eine Anlagefläche auf, an welcher die Seilklemme mit einer Gegenanlagefläche unter Wirkung der Zugkraft in Anlage bringbar ist. Der Seilaufnahmeblock bildet mit anderen Worten für die Seilklemme in Zugrichtung des Seiles einen Stopper. In entgegengesetzter Richtung kann das Seil jedoch nach Lösen eines Sicherungsstiftes ohne, dass Manipulationen an der Seilklemme vorgenommen werden müssten, aus dem Seilaufnahmebock zurückgezogen werden, sofern es von der Trommel vollständig abgewickelt worden ist.

Aufgrund dieser Maßnahme kann die Montage oder Demontage der Seilklemme außerhalb des Hebewerks erfolgen, wo im Regelfall großzügigere Platzverhältnisse herrschen als innerhalb des Hebewerks selbst und damit die zur Montage oder zur Demontage der Seilklemme erforderlichen Maßnahmen einfacher und zuverlässiger durchgeführt werden können.

Die Seilklemme besteht vorzugsweise im Wesentlichen aus einem Konusspannsatz, d.h. aus einer Anordnung, die einen das Seil umgebenden Innenkonusring umfasst, der mit einem Außenkonusring zusammenwirkt, derart, dass der Innenkonusring in Zugrichtung kraftschlüssig mit dem Seil verbindbar ist.

Um ein unbeabsichtigtes Lösen der kraftschlüssigen Verbindung zwischen dem Innenkonusring und dem Seil zu verhindern, sind die Konusflächen der Innen- und Außenkonusringe vorzugsweise derart ausgebildet, dass eine Selbsthemmung besteht. Zusätzlich kann der Innenkonusring strukturiert sein. Er kann beispielsweise Querrillen oder eine Gewindestruktur aufweisen. Zum Erhalt eines einmal erwirkten Klemmsitzes des Innenkonusrings auf dem Seil sind daher keine weiteren Maßnahmen zwingend erforderlich.

Innen- und Außenkonusringe können in an sich bekannter Weise, die eine Reduktion des Innendurchmessers des Innenkonusringes während des Verspannvorgangs bewirkt, ausgebildet sein. Besonders bevorzugt ist es jedoch, den Innenkonusring mehr-, beispielsweise dreiteilig mit drei parallel zur Zugrichtung des Seiles voneinander getrennten Segmenten auszubilden.

Damit die auf das Seil wirkende Zugbelastung im Sinne der Verbesserung des Klemmsitzes wirkt, ist der Innenkonusring vorzugsweise derart angeordnet, dass die Konusflächen zur Last hin aufeinander zu laufen.

Es ist eine Montagevorrichtung vorgesehen, in welcher die Seilklemme außerhalb des Seilaufnahmeblocks an dem Seil montierbar und in Zugrichtung des Seils festlegbar ist. Das Vorhandensein einer derartigen Montagevorrichtung hat den wesentlichen Vorteil, dass das Seil und die Seilklemme nicht gegebenenfalls unter Verwendung von Haltewerkzeugen manuell gehalten werden müssen, sondern lediglich zu dem von der Montagevorrichtung definierten Ort zu verlagern sind.

Die Montagevorrichtung umfasst eine Abstützfläche, an welcher die Seilfläche in Zugrichtung des Seiles abstützbar ist. Somit wird einerseits vermieden, dass das Seil unter Wirkung des Eigengewichts und gegebenenfalls durch Zusatzgewichte, die von angehängten Einrichtungen herrühren, aus der Montagevorrichtung heraus verlagert wird. Andererseits kann die Seilklemme derart ausgestaltet sein, dass die über die Abstützfläche in die Seiten klemme eingeleitete Kraft im Sinne einer Erhöhung des Kraftschlusses zwischen dem Innenkonusring und dem Seil führt.

Grundsätzlich ist es denkbar, die Seilklemme derart zu konzipieren, dass der Klemmsitz allein durch das von dem Zug hervorgerufene Abstützen der Seilklemme an der Abstützfläche erfolgt. Besonders bevorzugt ist es jedoch, an der Montagevorrichtung eine Spannvorrichtung vorzusehen, mittels welcher der Innen- und Außenkonusring mit einer vorbestimmbaren Kraft in Wirkverbindung bringbar sind. Es lassen sich hierdurch gezielt vorberechenbare oder zuvor ermittelte Kraftschlüsse des Innenkonusrings mit dem Seil realisieren.

Hierzu kann die Spannvorrichtung mindestens eine Pressvorrichtung umfassen, mittels welcher der Innenkonusring in Zugrichtung des Seiles in den Außenkonusring drückbar ist.

Vorzugsweise werden hierzu hydraulische, mechanische und/oder elektrische Betätigungsmittel verwendet.

Die Erfindung soll nun unter Bezugnahme auf die beigefügten Zeichnungen, die - schematisch und ausschnittsweise - Ausführungsbeispiele eines erfindungsgemäßen Hebewerks wiedergeben, erläutert werden. Es zeigen:
- Fig. 1: ein Ausführungsbeispiel dieses Hebewerks in einer perspektivischen Ansicht von schräg oben, jedoch ohne Montagevorrichtung;
- Fig. 2: die Trommel dieses Hebewerks sowie die in Fig. 1 nicht erkennbare Montagevorrichtung in einer perspektivischen Einzelteildarstellung;
- Fig. 3: eine Ausschnittsdarstellung des Seilaufnahmebocks mit Seilklemme und befestigtem Seil - teilgeschnitten - in einer Ansicht gemäß Fig. 2 von oben (Ansicht III in Fig. 2), wobei sich die Seilklemme jedoch in dem Seilaufnahmebock der Bordscheibe befindet;
- Fig. 4: - wiederum teilgeschnitten - die Seilklemme beim in die Montagevorrichtung eingesetzten Zustand während des Verspannens mit Hilfe einer mechanisch wirkenden Spannvorrichtung;
- Fig. 5: die Ansicht V in Fig. 4;
- Fig. 6: die Ansicht VI in Fig. 4;
- Fig. 7: eine Darstellung der Seilklemme in der Montagevorrichtung während des Spannvorganges in einer Fig. 4 entsprechenden Darstellung, jedoch mit einer hydraulisch wirkenden Spannvorrichtung sowie
- Fig. 8: eine in die Montagevorrichtung eingebrachte Seilklemme, jedoch während des Lösevorganges.

Das in der Zeichnung als Ganzes mit 100 bezeichnete Ausführungsbeispiel eines Hebewerks umfasst einen Rahmen 1 rechteckigen Grundrisses, der aus miteinander verschweißten Doppel-T-Stahlträgern 2 besteht.

Zum Aufholen und Ablassen eines in der Zeichnung nicht dargestellten Bohrgeräts umfasst das Hebewerk 100 ein Seil 3, welches mit Hilfe einer Trommel 4, die wahlweise in beiden Drehrichtungen um die Drehachse D motorisch drehantreibbar ist, auf- und abgewickelt werden kann.

Die Trommel 4 ist drehfest auf einer Trommelwelle 5 befestigt. Sie ist in Lagerböcken 6, 7 gelagert, die jenseits zweier Bordscheiben 10, 11, die einen größeren Durchmesser als die Trommel 4 aufweisen und die äußeren Stirnseiten bilden, angeordnet sind.

Das in der Zeichnung links dargestellte Ende der Trommelwelle 5 ist drehfest mit der Scheibe 12 einer Scheibenbremsanordnung 13 befestigt, die in Richtung der Drehachse D um 180° versetzt zwei Bremszangen 14, 15 umfasst. Mittels der Scheibenbremsanordnung 13 kann die Drehgeschwindigkeit der Trommel 4 während des Abwickelvorganges des Seils 4 abgebremst oder auch vollständig blockiert werden.

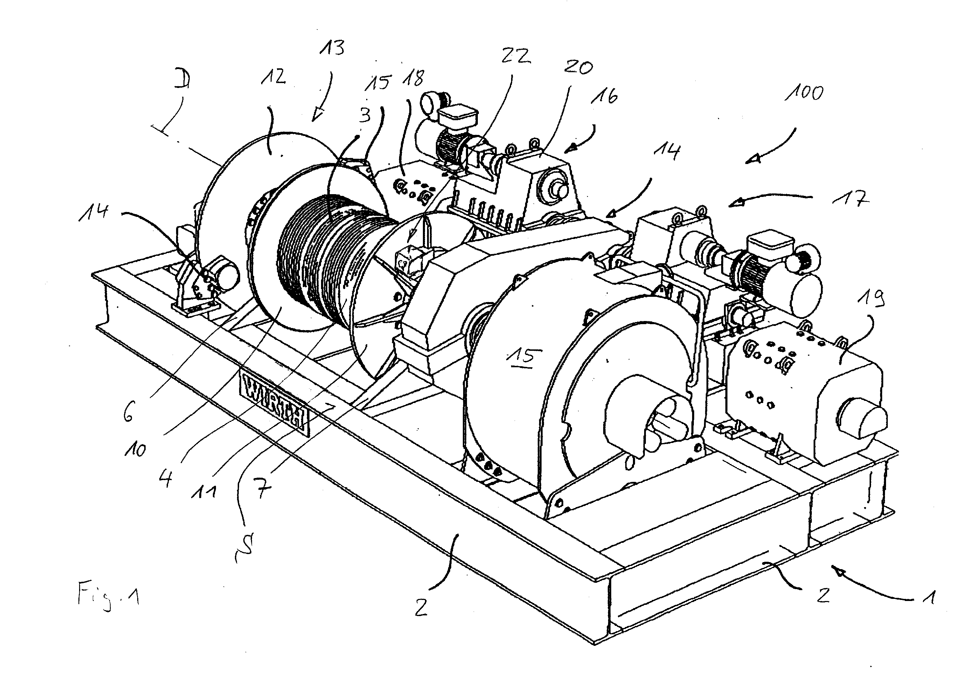

Jenseits der anderen, in Fig. 1 rechts dargestellten Bordscheibe 11 ist die Trommelwelle 5 mit der Ausgangsseite einer Getriebeeinheit 14 und mit einer nachgeschalteten Wirbelstrombremse 15 verbunden. Letztere dient ebenfalls der Abbremsung der Abwickelgeschwindigkeit der Trommel 4. Ihr Einsatz wird jedoch demjenigen der Scheibenbremsanordnung 13 bevorzugt, da das Aufbringen der Bremsenergie verschleißfrei und ohne durch mechanischen Eingriff hervorgerufene Lärmbelästigung erfolgt.

Neben der Anordnung aus Scheibenbremsanordnung 13, Trommel 4 und Wirbelstrombremse 18 sind beidseitig der Getriebeeinheit 14 zwei Drehantriebseinrichtungen 16, 17 an dem Rahmen 1 befestigt. Jede der Drehantriebseinrichtungen 16, 17 umfasst einen Elektromotor 18, 19, dessen Ausgangswelle jeweils mit der Eingangswelle eines Schaltgetriebes 20, 21 drehfest verbunden ist.

Die beiden Ausgangswellen der Schaltgetriebe 20, 21 sind mit der Getriebeeinheit 14 verbunden, die über Zwischenräder mit der Trommelwelle 5 verbunden sind. Die Getriebeanordnung 14 dient somit der Übertragung von Drehmomenten zwischen den Ausgangswellen der Schaltgetriebe 20, 21 und der Trommelwelle 5. Im Falle des Aufwickelns des Seils 3 auf die Trommel 4 treiben die Drehantriebseinrichtungen 16, 17 die Trommelwelle 5 an. Das im Falle des Wickelns des Seils 3 von der Trommel 4 erforderliche Abbremsen der Trommel 4 kann ebenfalls durch die Elektromotoren 18, 19 erfolgen, die dann als Generator wirken. Hierdurch kann die kinetische Energie der rotierenden Trommel in elektrische Energie umgewandelt und rückeingespeist werden.

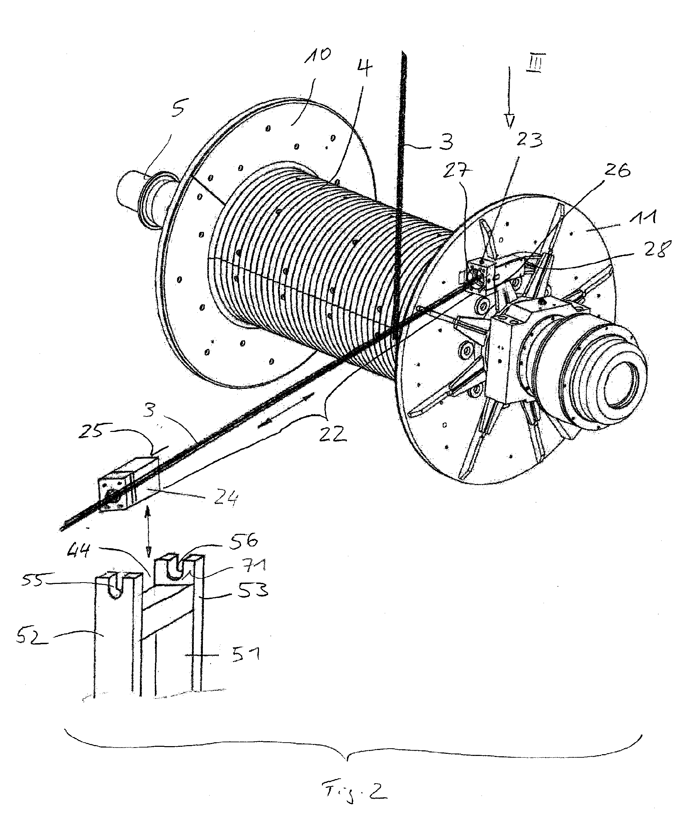

Zur Befestigung des Seiles 3 an der Trommel 4 dient eine an der in der Zeichnung rechts dargestellten Bordscheibe 11 vorgesehene Festlegeeinrichtung 22. Sie umfasst einen in Zugrichtung des Seils an der Bordscheibe 11 festgelegten Seilaufnahmeblock 23, durch den das Seil 3 lose hindurchgeführt ist (s. Fig. 2). Ferner umfasst die Festlegeeinrichtung 22 eine an dem Seil 3 in Zugrichtung festlegbare Seilklemme 24, deren Aufbau und Funktionsweise noch weiter unten beschrieben wird. Sie umfasst eine Gegenanlagefläche 25, die unter Wirkung der Zugkraft an der zugewandten Anlagefläche 26 des Seilaufnahmebocks 23 anliegt.

Der Seilaufnahmeblock 23 weist eine Durchgangsöffnung 27 auf, die in eine Öffnung 28 in der Bordscheibe 11 mündet, durch welche das Seil 3 von der in der Zeichnung rechts dargestellten Außenseite der Bordscheibe 11 zur Innenseite der Trommel 4 geführt wird.

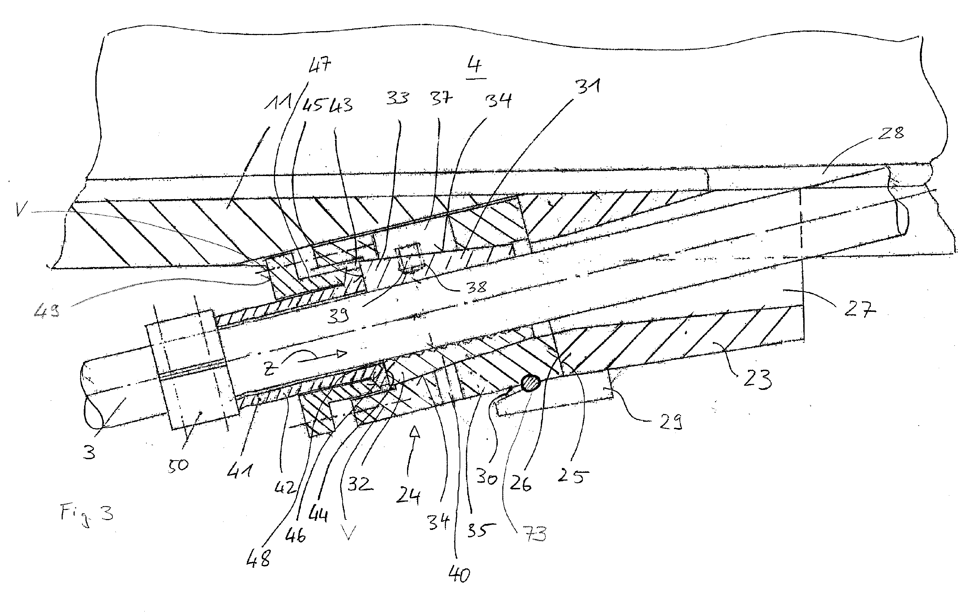

Wie aus Fig. 3, welche die Seilklemme 24 im verspannten Zustand mit ihrer Gegenanlagefläche 25 an der Anlagefläche 26 des Seilaufnahmeblocks 23 zeigt, ersichtlich ist, ist an dem Seilaufnahmeblock 23 ein Führungsansatz 29 vorgesehen, welcher die Anlagefläche 26 zur Seilklemme hin überragt und hier einen sich schräg erweiternden Bereich 30 aufweist. Er dient der Vereinfachung der Positionierung der Seilklemme 24 und deren Sicherung durch den Sicherungsstift 73.

Die Seilklemme 24 ist als Art Konusspannsatz ausgebildet, welcher im verspannten Zustand mit dem Seil eine kraftschlüssige Verbindung bewirkt. Hierzu umfasst die Seilklemme 24 einen das Seil 3 umgebenden Innenkonusring 31, welcher in Zugrichtung Z des Seiles in drei ca. 120°-Segmente unterteilt ist, von denen in der Zeichnung lediglich zwei Segmente 32, 33 erkennbar sind. Die Segmente weisen Konusflächen 34 auf, die zur Last hin aufeinander zu laufen.

Umgeben ist der Innenkonusring 31 von einem Außenkonusring 35, dessen Konusfläche 36 komplementär zu den Konusflächen 34 der Segmente des Innenkonusrings 31 ausgebildet ist. Die Winkel der Konusflächen 34, 36 sind derart ausgewählt, dass eine Selbsthemmung besteht.

Der Außenkonusring 35 weist an einem Bereich seines Umfanges eine radiale, im Querschnitt langlochförmige Öffnung 37 auf. Durch diese Öffnung ist in eine blind endende Bohrung 38 in dem Segment 33 des Innenkonusrings 31 ein Spannstift 39 eingepresst. Er ragt - wie in Fig. 3 erkennbar ist - im vollständig eingebauten Zustand in die langlochförmige Öffnung 37 hinein und bewirkt somit eine Verdrehsicherung zwischen dem Innenkonusring 31 und dem Außenkonusring 35.

Auf der der langlochförmigen Öffnung 37 gegenüberliegenden Seite ist in den Außenkonusring 35 eine Gewindebohrung 40 eingearbeitet. Sie dient der wahlweisen Anbringung eines in der Zeichnung nicht dargestellten Mittels zur Verbindung mit einem Hebezeug, beispielsweise einer Schrauböse.

Die Seilklemme 24 umfasst des Weiteren eine Druckbuchse 41, die mit einem radial über einen zylindrischen Teil 42 überstehenden Flansch 43 mit dessen Stirnseite 44 an der ihm zugewandten Stirnseite 45 des Innenkonusrings 31 anliegt.

An der der Stirnseite 44 gegenüberliegenden nach außen hin abfallenden Flanschfläche 46 der Druckbuchse 41 liegt ein Sicherungsring 47 mit seiner Stirnseite 48 an. An seinem der Flanschfläche 46 gegenüberliegenden Ende weist auch der Sicherungsring 47 einen Flansch 49 auf. Er dient der Bewerkstelligung einer in Fig. 3 lediglich strichpunktiert angedeuteten Verschraubung V, mittels welcher der Sicherungsring 47 in Richtung des Außenkonusrings 35 gezogen wird, um so den Konusspannsitz des Innenkonusrings 31 in dem Außenkonusring 35 gegen ein unerwünschtes Lockern zu sichern.

Den Abschluss der Seilklemme 24 bildet ein am äußeren Endbereich der Druckbuchse 41 vorgesehenes, zweiteiliges Klemmstück 50, welches zwecks Erleichterung der Montierbarkeit in Zugrichtung Z geteilt ausgebildet ist. Die beiden Teile des Klemmstücks 50 sind miteinander verschraubt, wobei die Verschraubungen wiederum lediglich strichpunktiert dargestellt sind.

Das Hebewerk umfasst eine Montagevorrichtung 51, welche beispielsweise im Bereich der Stelle S an dem Rahmen 1 wahlweise oder dauerhaft vorgesehen sein kann. Die Montagevorrichtung 51 umfasst einen zwischen zwei Stützen 52, 53 ausgebildeten Aufnahmeraum 54 für die Seilklemme 24. Hierzu sind in den oberen Bereichen der Stützen 52, 53 nach oben offene Aussparungen 55, 56 vorgesehen, in welche das Seil 3 einlegbar ist (s. Fig. 2). Der obere Bereich der Stütze 53 bildet eine Anlagefläche für die Seilklemme 24.

Bei einer ersten Ausführungsform der Montagevorrichtung 51 ist die in der Betriebsstellung von der Trommel 4 fort weisende Stütze 52, die über eine massive Brücke 57 mit der Stütze 53 verbunden ist, zur Ausbildung einer Pressvorrichtung P im oberen Bereich mit einer oder mehreren, vorzugsweise vier Gewindebohrungen 58 versehen. In sie sind eine oder mehrere Druckschraube 59 eingedreht, deren in die Aufnahme 54 hineinragendes Ende gegen die äußere Stirnseite 60 des Sicherungsrings 47 drückt. Durch Anziehen der Druckschraube 59 kann somit die Verspannung der Segmente des Innenkonusrings 31 mit dem Außenkonusring 35 und somit der Kraftschluss der Seilklemme mit dem Seil 3 bewirkt werden, indem sich die Seilklemme 24 an der Abstützfläche 72 abstützt.

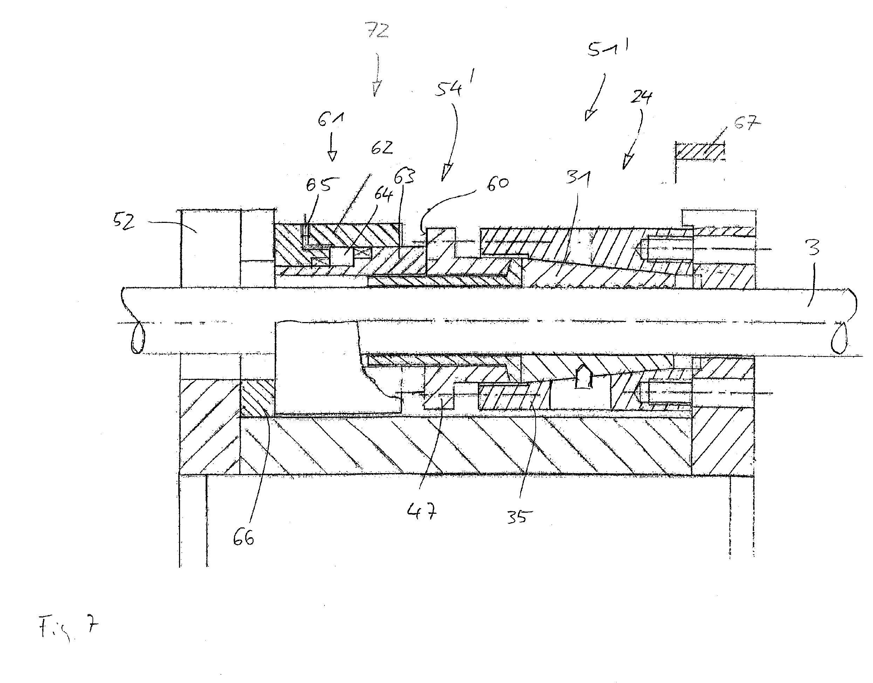

Eine andere Ausführungsform der Montagevorrichtung, nun mit 51' bezeichnet, ist in Fig. 7 dargestellt. Anstelle der Druckschrauben 59, die in die Gewindebohrung 58 eingedreht sind, befindet sich zur Ausbildung der Pressvorrichtung P in der Aufnahme 54' nun eine hydraulisch betätigte Druckvorrichtung 61, die ein äußeres Zylinderstück 62 und ein diesem gegenüber in Zugrichtung Z verlagerbares Kolbenstück 63 aufweist. Zwischen dem Zylinderstück 62 und dem Kolbenstück 63 ist ein ringförmiges Zylindervolumen 64 ausgebildet, in welches eine Hydraulikleitung 65 mündet, über welche wahlweise unter Druck befindliche Hydraulikflüssigkeit zugeführt oder abgesaugt werden kann.

Sowohl das Zylinderstück, als auch das Kolbenstück sind hohl gebohrt, so dass das Seil 3 hindurchgeführt werden kann. Das Zylinderstück 62 liegt über Druckstücke 66 an der Stütze 52' an, das Kolbenstück 63 an der äußeren Stirnseite 60 des Sicherungsrings 47.

Wie aus Fig. 7 sinnfällig wird, kann durch Beaufschlagung der Hydraulikleitung 65 mit unter Druck stehendem Hydraulikmedium der Innenkonusring 31 in den Außenkonusring 35 gedrückt und somit die kraftschlüssige Verbindung zwischen der Seilklemme 24 und dem Seil 3 bewirkt werden, indem sich wiederum die Seilklemme 24 an der Abstützfläche 72 abstützt.

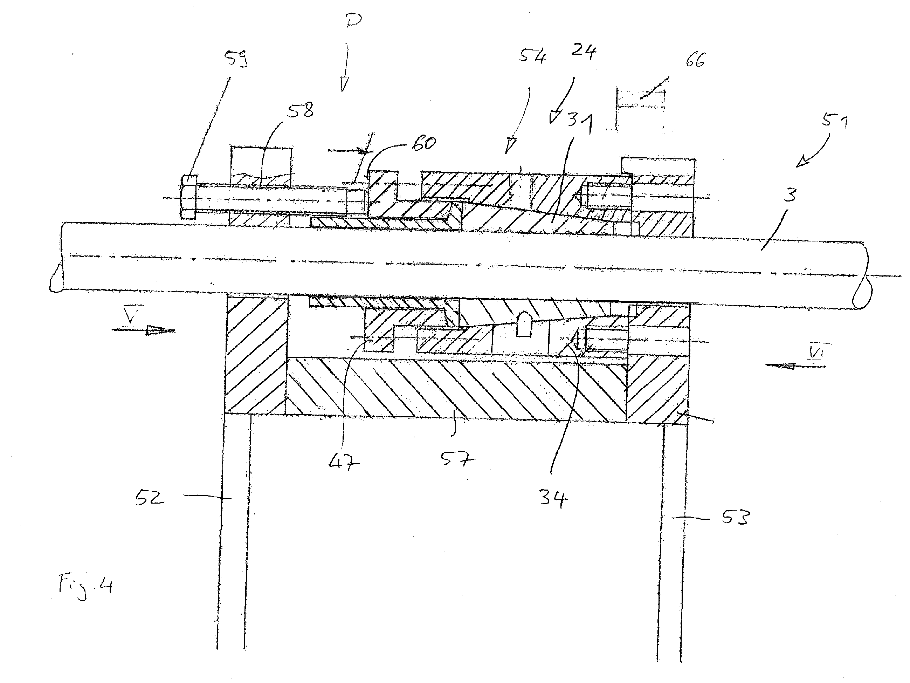

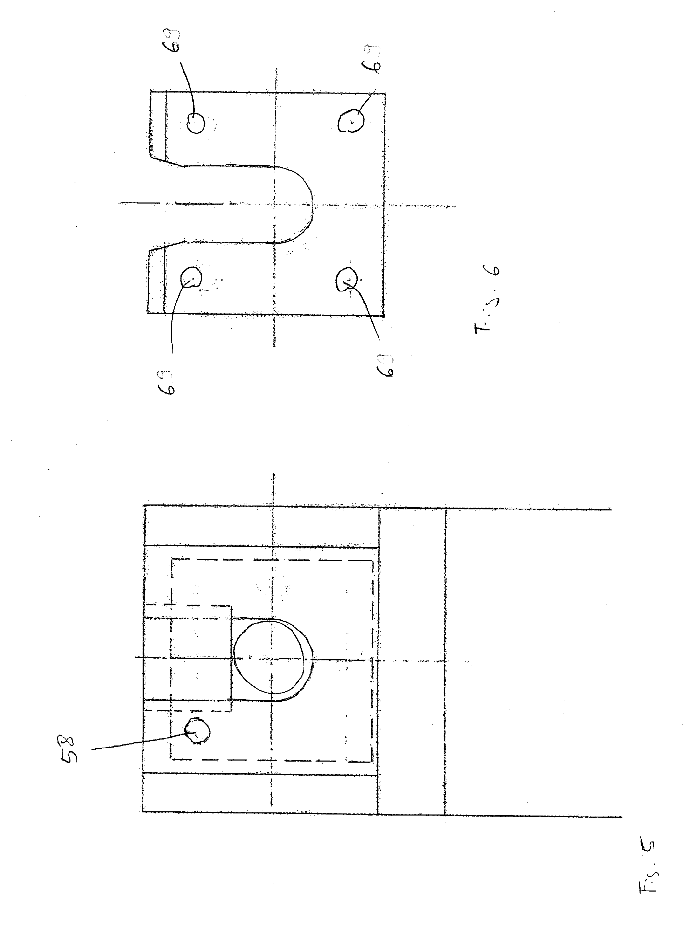

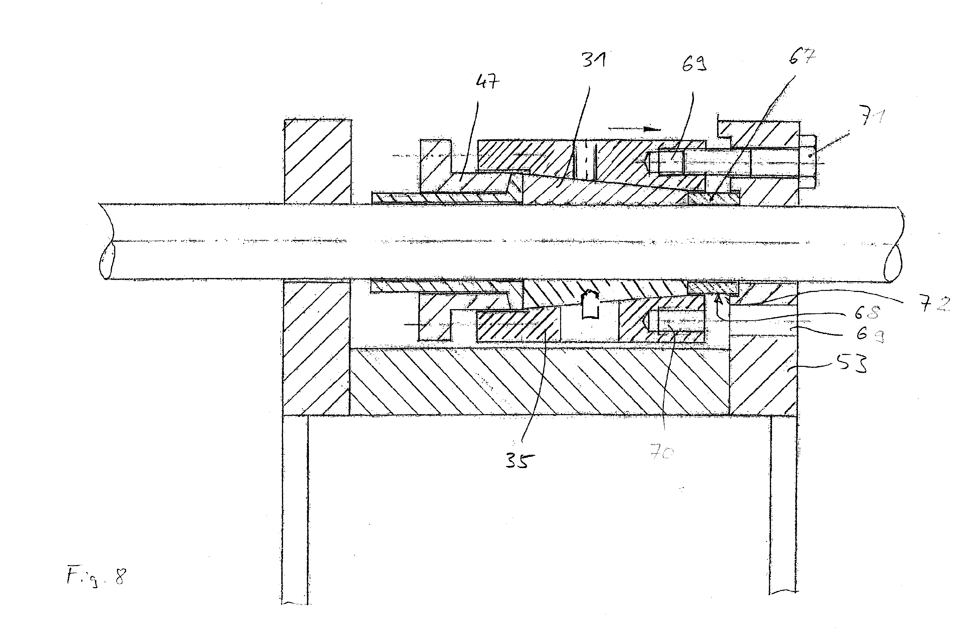

Zum Lösen der Seilklemme wird ein zweiteiliger, in Fig. 4 und 7 lediglich oben angedeuteter Lösering 67 vorgehalten, der nach Rückzug von der Abstützfläche 72 in einen Ringraum 68 zwischen der Abstützfläche 72 und dem Innenkonusring 31 einsetzbar ist. Durch in der Stütze 53 vorgesehene Bohrungen 69 (s. auch Fig. 6) sind Löseschrauben 71, von denen in Fig. 8 lediglich eine dargestellt ist, in Gewindebohrungen 70 des Außenkonusrings 35 eindrehbar, so dass dieser beim Festziehen der Löseschrauben 71 von dem Innenkonusring 31 abziehbar ist, da sich dieser über den Lösering 67 an der Stütze 53 abstützt.

Es versteht sich, dass vor dem Lösevorgang Sicherungsschrauben, die den Sicherungsring 47 gegenüber dem Außenkonusring 35 fixieren, zumindest gelöst oder entfernt werden müssen.

### Bezugszeichenliste:

- 100: Hebewerk
- 1: Rahmen
- 2: Träger
- 3: Seil
- 4: Trommel
- 5: Trommelwelle
- 6: Lagerbock
- 7: Lagerbock
- 10: Bordscheibe
- 11: Bordscheibe
- 12: Scheibe
- 13: Scheibenbremsanordnung
- 14: Getriebeeinheit
- 15: Wirbelstrombremse
- 16: Drehantriebseinrichtung
- 17: Drehantriebseinrichtung
- 18: Elektromotor
- 19: Elektromotor
- 20: Schaltgetriebe
- 21: Schaltgetriebe
- 22: Festlegeeinrichtung
- 23: Seilaufnahmeblock
- 24: Seilklemme
- 25: Gegenanlagefläche
- 26: Anlagefläche
- 27: Durchgangsöffnung
- 28: Öffnung
- 29: Führungsansatz
- 30: Bereich
- 31: Innenkonusring
- 32: Segment
- 33: Segment
- 34: Konusflächen
- 35: Außenkonusring
- 36: Konusfläche
- 37: langlochförmige Öffnung
- 38: blind endende Bohrung
- 39: Spannstift
- 40: Gewindebohrung
- 41: Druckbuchse
- 42: zylindrischer Teil
- 43: Flansch
- 44: Stirnseite
- 45: Stirnseite
- 46: Flanschfläche
- 47: Sicherungsring
- 48: Stirnseite
- 49: Flansch
- 50: Klemmstück
- 51: Montagevorrichtung
- 52: Stütze
- 53: Stütze
- 54: Aufnahme
- 55: Aussparung
- 56: Aussparung
- 57: Brücke
- 58: Gewindebohrung
- 59: Druckschraube
- 60: äußere Stirnseite
- 61: Druckvorrichtung
- 62: Zylinderstück
- 63: Kolbenstück
- 64: Zylinderraum
- 65: Hydraulikleitung
- 66: Druckstück
- 67: Lösering
- 68: Ringraum
- 69: Bohrungen
- 70: Gewindebohrungen
- 71: Löseschrauben
- 72: Abstützfläche
- 73: Sicherungsstift

- D: Drehachse
- P: Pressvorrichtung
- S: Stelle
- V: Verschraubung
- Z: Zugrichtung

## Patentansprüche

1. Hebewerk (100)
mit einem Seil (3) zum Ablassen und Aufholen einer Last, insbesondere einer Bohreinrichtung und
mit einer um eine Drehachse (D) drehbar gelagerten Trommel (4) zum Aufund Abwickeln des Seils (3), die mindestens eine Bordscheibe (11) umfasst, an welcher eine Festlegeeinrichtung (22) zur Festlegung des Seils (3) vorgesehen ist, wobei
die Festlegeeinrichtung einen in Zugrichtung (Z) des Seils (3) an der Bordscheibe (11) festgelegten Seilaufnahmeblock (23), durch den das Seil (3) lose hindurchgeführt ist, und eine an dem Seil (3) festlegbare Seilklemme (24) umfasst, wobei der Seilaufnahmeblock (23) eine Anlagefläche (26) aufweist, an welcher die Seilklemme (24) mit einer Gegenanlagefläche (25) unter Wirkung der Zugkraft (Z) in Anlage bringbar ist, **dadurch gekennzeichnet, dass** eine Montagevorrichtung (51) vorgesehen ist, in welcher die Seilklemme (24) außerhalb des Seilaufnahmeblocks (23) an dem Seil (3) montierbar und festlegbar ist, derart, dass das Seil (3) und die Seilklemme (24) nicht gegebenenfalls unter Verwendung von Haltewerkzeugen manuell gehalten werden müssen sondern lediglich zu dem von der Montagevorrichtung (51) definierten Ort zu verlagern sind, wobei die Montagevorrichtung (51) eine Abstützfläche (72) umfasst, an welcher die Seilklemme in Zugrichtung (Z) des Seiles (3) abstützbar ist.

2. Hebewerk nach Anspruch 1, **dadurch gekennzeichnet, dass** die Seilklemme (24) einen das Seil (3) umgebenden Innenkonusring (31) umfasst, der mit einem Außenkonusring 35 derart in Wirkverbindung bringbar ist, dass der Innenkonusring (31) in Zugrichtung (Z) kraftschlüssig mit dem Seil (3) verbindbar ist.

3. Hebewerk nach Anspruch 2, **dadurch gekennzeichnet, dass** die Konusflächen (34, 36) der Innen- und Außenkonusringe (31, 35) derart ausgebildet sind, dass eine Selbsthemmung besteht.

4. Hebewerk nach Anspruch 2 oder 3, **dadurch gekennzeichnet, dass** der Innenkonusring (31) mehrere, etwa parallel zur Zugrichtung (Z) des Seiles (3) voneinander getrennte Segmente (32, 33) umfasst.

5. Hebewerk nach einem der Ansprüche 1 bis 4, **dadurch gekennzeichnet, dass** der Innenkonusring (31) derart angeordnet ist, dass die Konusflächen (34) zur Last hin aufeinander zulaufen.

6. Hebewerk nach einem der Ansprüche 2 bis 5, **dadurch gekennzeichnet, dass** die Montagevorrichtung (51) eine Druckvorrichtung (61) umfasst, mittels welcher der Innen- und der Außenkonusring (31, 35) in Wirkverbindung bringbar sind.

7. Hebewerk nach Anspruch 6, **dadurch gekennzeichnet, dass** die Druckvorrichtung (61) mindestens eine Pressvorrichtung (P) umfasst, mittels welcher der Innenkonusring (31) in Zugrichtung (Z) des Seiles (3) in den Außenkonusring (35) drückbar ist.

8. Hebewerk nach Anspruch 7, **dadurch gekennzeichnet, dass** die Pressvorrichtung (P) hydraulische, mechanische und/oder elektrische Betätigungsmittel umfasst.

## Claims

1. A hoist, comprising
a cable (3) configured to lower and raise a load, in particular a drilling means, and
a drum (4) mounted to be rotatable about an axis of rotation (D) and configured to wind up and unwind the cable (3), the drum comprising at least one flanged wheel (11) on which a securing device (22) for securing the cable (3) is provided, wherein
the securing device comprises a cable-accommodating block (23) which is secured on the flanged wheel (11) in the direction of tension (Z) and through which the cable (3) is passed loosely, and a cable clamp (24) which can be secured on the cable (3), wherein the cable-accommodating block (23) has an abutment surface (26) on which the cable clamp (24) can be brought in engagement with a counterpart abutment surface (25) under the action of the tensile force (Z), **characterized in that** an installation device (51) is provided in which the cable clamp (24) can be installed and secured outside of the cable-accommodating block (23) on the cable (3) in such a manner that the cable (3) and the cable clamp (24) do not have to be manually held, optionally by using holding tools, but merely have to be displaced to the location defined by the installation device (51), wherein the installation device (51) comprises a support surface (72) on which the cable clamp can be supported in the direction of tension (Z) of the cable (3).

2. The hoist according to claim 1, **characterized in that** the cable clamp (24) comprises an interior cone ring (31) that can be operatively connected to an exterior cone ring (35) in such a manner that the interior cone ring (31) can be connected to the cable (3) in a force-locking manner in the direction of tension (Z).

3. The hoist according to claim 2, **characterized in that** the cone surfaces (34, 36) of the interior and exterior cone rings (31, 35) are formed in such a manner that a self-locking effect is provided.

4. The hoist according to claim 2 or 3, **characterized in that** the interior cone ring (31) comprises a plurality of segments (32, 33) which are separated from one another and approximately parallel to the direction of tension (Z) of the cable (3).

5. The hoist according to any one of the claims 1 to 4, **characterized in that** the interior cone ring (31) is arranged in such a manner that the cone surfaces (34) converge towards the load.

6. The hoist according to any one of the claims 2 to 5, **characterized in that** the installation device (51) comprises a pressure device (61) by means of which the interior and the exterior cone rings (31, 35) can be brought into an operative connection.

7. The hoist according to claim 6, **characterized in that** the pressure device (61) comprises at least one pressing device (P) by means of which the interior cone ring (31) can be pressed into the exterior cone ring (35) in the direction of tension (Z) of the cable (3).

8. The hoist according to claim 7, **characterized in that** the pressing device (P) comprises hydraulic, mechanical and/or electrical actuation means.

## Revendications

1. Dispositif de levage (100)
avec un câble (3) pour faire descendre et monter une charge, en particulier un dispositif de forage, et
avec un tambour (4) monté de façon rotative autour d'un axe de rotation (D) pour l'enroulement et le déroulement du câble (3), comprenant au moins une poulie à rebord (11) sur laquelle est prévu un dispositif de fixation (22) pour la fixation du câble (3), dans lequel
le dispositif de fixation comprend un bloc de réception de câble (23) fixé à la poulie à rebord (11) dans une direction de traction (Z) du câble (3), à travers lequel le câble (3) passe librement, ainsi qu'un serre-câble (24) apte à être fixée au câble (3), le bloc de réception de câble (23) présentant une surface de contact (26) contre laquelle le serre-câble (24) peut être appliqué avec une surface de contact opposée (25) sous l'action de la force de traction (Z), **caractérisé en ce qu'**il est prévu un dispositif de montage (51) dans lequel le serre-câble (24) peut être monté et fixé sur le câble (3) à l'extérieur du bloc de réception de câble (23), de telle façon que le câble (3) et le serre-câble (24) n'ont pas besoin d'être éventuellement maintenus manuellement à l'aide d'outils de maintien, mais doivent seulement être déplacés vers l'emplacement défini par le dispositif de montage (51), le dispositif de montage (51) comprenant une surface d'appui (72) sur laquelle le serre-câble peut s'appuyer dans la direction de traction (Z) du câble (3).

2. Dispositif de levage selon la revendication 1, **caractérisé en ce que** le serre-câble (24) comprend un anneau conique intérieur (31) apte à être mis en communication opérationnelle avec un anneau conique extérieur (35), de telle façon que l'anneau conique intérieur (31) peut être relié à force au câble (3) dans la direction de traction (Z).

3. Dispositif de levage selon la revendication 2, **caractérisé en ce que** les surfaces coniques (34, 36) des anneaux coniques intérieur et extérieur (31, 35) sont conçues de manière à établir un blocage automatique.

4. Dispositif de levage selon la revendication 2 ou 3, **caractérisé en ce que** l'anneau conique intérieur (31) comprend plusieurs segments (32, 33) séparés les uns des autres, approximativement parallèles à la direction de traction (Z) du câble (3).

5. Dispositif de levage selon l'une des revendications 1 à 4, **caractérisé en ce que** l'anneau conique intérieur (31) est agencé de manière à ce que les surfaces coniques (34) se rejoignent en direction de la charge.

6. Dispositif de levage selon l'une des revendications 2 à 5, **caractérisé en ce que** le dispositif de montage (51) comprend un dispositif de pression (61), au moyen duquel les anneaux coniques intérieur extérieur (31, 35) peuvent être mis en liaison opérationnelle.

7. Dispositif de levage selon la revendication 6, **caractérisé en ce que** le dispositif de pression (61) comprend au moins un dispositif de pressage (P) au moyen duquel l'anneau conique intérieur (31) peut être pressé dans l'anneau conique extérieur (35) dans la direction de traction (Z) du câble (3).

8. Dispositif de levage selon la revendication 7, **caractérisé en ce que** le dispositif de pressage (P) comprend des moyens d'actionnement hydrauliques, mécaniques et/ou électriques.
